# EUROPÄISCHE PATENTSCHRIFT

(11) **EP 1 033 579 B1**
(45) Veröffentlichungstag und Bekanntmachung des Hinweises auf die Patenterteilung: **01.01.2014**
(21) Anmeldenummer: 00100357.3
(22) Anmeldetag: 07.01.2000
(51) Int. Cl.: G01P 3/66, B65H 61/00, G01B 7/04

(54) **Verfahren, Aufnehmer und Schaltungsanordnung zur berührungslosen Bewegungsmessung an einem Faden**
Method, pick-up and circuit for non-contact measurement of the movement of a thread
Procédé, capteur et circuit pour la détermination sans contact du mouvement d'un fil

(30) Priorität: 09.01.1999 DE 19900581
(43) Veröffentlichungstag der Anmeldung: 06.09.2000
(73) Patentinhaber: Sentex Chemnitz GmbH, 09112 Chemnitz (DE)
(72) Erfinder: Schäfer, Wolfgang, Dr.-Ing., 09127 Chemnitz (DE)
(74) Vertreter: Patentanwälte Findeisen & Neumann

(56) Entgegenhaltungen:
- DE-A- 4 408 312
- GB-A- 1 249 610
- US-A- 3 927 356

## Beschreibung

Die Erfindung betrifft ein Verfahren zum berührungslosen Messen der axialen Geschwindigkeit oder der Lauflänge eines textilen Fadens oder zum Anzeigen von dessen axialer Bewegung, durch Erfassen der von den Fadenladungen ausgehenden Influenzwirkung gemäß dem Oberbegriff des Anspruchs 1 sowie einen Aufnehmer gemäß dem Oberbegriff des Anspruchs 5 und eine Schaltungsanordnung in mehreren Ausführungsvarianten.

Unter axialer Bewegung soll hier eine Bewegung des Fadens in Richtung seiner Längsausdehnung, auch Fadenachse genannt, verstanden werden. Die außerdem noch benutzten Begriffe Fadenlaufrichtung, Laufgeschwindigkeit oder die Lauflänge beziehen sich gleichfalls nur auf diese axiale Bewegungsrichtung.
Die axiale Bewegung betrifft möglicherweise auch nur eine entsprechend gerichtete Komponente einer komplizierteren Gesamtbewegung des Fadens, mit noch anderen Komponenten, die aber nicht Gegenstand der vorliegenden Erfindung sind.
Eine solche komplizierte Gesamtbewegung kann außer der axialen Bewegung auch noch zum Beispiel hin- und hergehende oder rotierende Komponenten enthalten.

Zur berührungslosen Bestimmung der Laufgeschwindigkeit von sich bewegenden Objekten sind verschiedene Verfahren bekannt. Dies betrifft vor allem die Geschwindigkeitsmessung mit elektronischem Korrelator, die Laser-Doppler-Anemometrie (LDA) und das optoelektronische Verfahren nach der Ortsfilter-Methode. Aus der Laufgeschwindigkeit können über mathematische Beziehungen durch Umrechnung noch andere Größen gewonnen werden, beispielsweise durch Integration die Größe Lauflänge. Allen Verfahren ist gemeinsam, daß gegenüber dem bewegten Objekt Aufnehmer angeordnet sind, die einen vom Objekt ausgehenden oder von ihm modifizierten Energiefluß in Signale umwandeln, welche nach einem jeweils dem Verfahren eigenen Modus oder Algorithmus bis zur Anzeige der Laufgeschwindigkeit, der Lauflänge, der Bewegung des Objektes an sich usw. weiterverarbeitet werden.
Alle diese Verfahren sind schon auf den Faden, als spezielles bewegtes Objekt in der Textiltechnik, angewendet worden.

Dabei erfordert das LDA-Verfahren den größten technischen Aufwand und bringt aber gleichzeitig auch die höchste Genauigkeit. Eine wesentliche Kostensenkung, verbunden mit gleichzeitiger Genauigkeitserhöhung gelang beim Verfahren mit elektronischem Korrelator durch die Anwendung speziell ausgebildeter elektrostatischer Aufnehmer, beispielsweise nach DE 44 08 312 A1, für die Signalgewinnung an länglichen, elektrisch nichtleitenden Objekten, nach dem physikalischen Prinzip der Influenz. Die verbliebenen Kosten unter Verwendung eines Korrelators und damit der Notwendigkeit zweier Aufnehmer sind aber immer noch so hoch, daß eine Anwendung an jeder Arbeitsstelle bei Maschinen mit einer Vielzahl solcher Arbeitsstellen, beispielsweise an Aufspulmaschinen, unmöglich erscheint.

Einzig nach der Ortsfilter-Methode ist auch eine direkte Bestimmung der Lauflänge ausführbar, ohne vorher über die Zwischengröße Geschwindigkeit gehen zu müssen. Dies ist erreichbar über die fortlaufende Zählung der impulsähnlichen Perioden des genannten Ausgangssignals. Mit einer schnell veränderlichen Geschwindigkeit kann sich auch die Frequenz des periodischen Ausgangssignals schnell ändern. Die Methode gestattet deshalb eine sehr gute Meßdynamik. Die Ortsfilter-Methode ist auf die Messung der Fadenbewegungsgrößen bisher nur in optischen Verfahren angewendet worden, beispielsweise wäre eine Ausführung nach DE 43 07 530 dafür geeignet.

Die bis hierher aufgeführten Verfahren haben als Nachteile mindestens zu hohe Kosten und, außer dem Ortsfilter-Verfahren, auch eine nicht ausreichende Reaktionsfähigkeit auf schnelle oder kurzzeitige zeitliche Änderungen der Laufgeschwindigkeit.

Als ein weiteres Verfahren zur Bestimmung der Laufgeschwindigkeit ist aus DE 30 36 249, oder neuerlich aus DE 196 01 531, bekannt, elektrische Ladungen auf mindestens einen schmalen Bereich des bewegten Objektes extra aufzubringen, um danach aus dem Zeitabstand zwischen zwei im örtlichen Abstand definierten Impulsspitzen im Signal mindestens eines elektrostatischen Aufnehmers, an dem das Objekt vorbeiläuft, auf die Geschwindigkeit zu schließen. Hier besteht der Nachteil insbesondere darin, daß die besondere Ladung nur mit entsprechendem Kostenaufwand aufgebracht werden kann und daß die natürliche Fadenladung zur Signalgewinnung nicht ausreicht.

Mit einer in DD 262 683 A1 beschriebenen Einrichtung ist zwar eine Bewegung, und nach entsprechender Auswertung sogar der Wert einer Geschwindigkeit, quer zur Fadenachse auswertbar oder meßbar, aber nicht in Längsrichtung zur Fadenachse. Die Ausführungen der vorliegenden Erfindung beziehen sich immer nur auf die axiale Geschwindigkeit des Fadens. Ebenso ist mit einer Einrichtung nach DD-PS 97 175 keinerlei Information über quantitative Größen der axialen Fadenbewegung gewinnbar. Beide Schriften zielen, in axialer Fadenlaufrichtung betrachtet, nicht auf eine strukturierte Empfindlichkeit gegenüber der Influenzwirkung ab.
Die einfache qualitative Information, ob der Faden überhaupt läuft oder nicht (Detektion der Fadenbewegung an sich) ist wegen des oftmals nicht genügend hohen Pegel eines selbst ebenfalls nur regellosen Signalverlaufs mit Funktionsunsicherheiten behaftet.

In DD 97 175 und DD 262 683 A1 wird der konstante Anteil ausgenutzt, während der veränderliche Anteil zu störenden Einflüssen führt; wobei letzterer aber dort wenig zum Tragen kommt, indem seine Intensität viel geringer ist.
Auch wenn mit einem einzigen Aufnehmer bereits ein Signal entsteht, das sogar periodisch ist, so spiegelt in den o.g. Schriften dessen Frequenz eine Periodizität in der Fadenbewegung wieder. Sie trägt keinesfalls die Information über die axiale Fadengeschwindigkeit.
Die meßbare Frequenz ist dort eindeutig mit der Frequenz der Bewegungsperiode, und zwar quer zur Fadenachse verknüpft. Sie darf deshalb nicht, wie demgegenüber bei Meßmethoden für die axiale Bewegung, mit einem zunächst mit Unsicherheiten behafteten Frequenzgemisch in Verbindung gebracht werden, wo die Frequenzbestandteile überhaupt nur über sehr komplizierte, dem Fachmann mit normaler Bildung zunächst gar nicht zugängliche, Erwägungen erklärt werden können.

Mindestens seit Erscheinen der Schrift CH 479 478 sind eine Reihe weiterer Verfahren und Einrichtungen vorgeschlagen worden, die demgegenüber den veränderlichen Anteil des Ladungsverlaufs ausnutzen, und die aber das gewonnene Signal nicht etwa bis zur Ermittlung der Laufgeschwindigkeit oder Lauflänge aufbereiten, sondern die nur den Zustand des Vorhandenseins des Signals und damit einer Fadenbewegung an sich anzeigen. Diesen haftet wie weiter oben bereits beschrieben bisher gleichfalls der Nachteil an, daß sie von manchem Fadenmaterial nur eine zu schwache Influenzwirkung erfahren, was zu Funktionsunsicherheiten geführt hat. Eine Vergrößerung der Längsausdehnung der die Influenzwirkung aufnehmenden ununterbrochenen Elektrode führte dabei nicht zu einer größeren Signalauslenkung.

Ein entscheidender Fortschritt hinsichtlich der Signalstärke bei Ausnutzung des veränderlichen Anteils im Ladungsverlauf wurde mit der in DE 44 08 312 A1 beschriebenen Einrichtung erzielt, bei der die im elektrostatischen Aufnehmer enthaltenen Elektroden unterbrochen sind, wobei in dieser Elektrodenanordnung, durch Zuordnung ununterbrochener Bereiche einer Signalelektrode zu Unterbrechungsbereichen einer ansonsten abschirmenden Bezugselektrode, eine wechselnde Aufnahmefähigkeit oder Empfindlichkeit gegenüber der vom sich in axialer Richtung bewegenden Faden ausgehenden Influenz erreicht wurde. In der Signalelektrode ist dadurch trotz deren großer Längsausdehnung eine infolge der Fadenlängsbewegung zeitbezogen regellos wechselnde Gesamtladung feststellbar, deren Frequenzzusammensetzung mittels unterschiedlicher Abmessungen der Bereiche in weiten Grenzen variierbar ist. Mit dem Ziel einer nachfolgenden Weiterverarbeitung der Signale mittels eines Korrelators wird dabei ein möglichst breitbandiges Frequenzgemisch angestrebt, welches nicht auf einen schmalen Frequenzbereich konzentriert sein darf. Die Bereiche nur einer solchen Elektrodenanordnung respektive nur eines Aufnehmers sind deshalb untereinander nicht gleichartig. Die Information über die Fadengeschwindigkeit wird außerdem keinesfalls aus dem Signal nur eines einzigen Aufnehmers entnommen.

In der US 3,927,356 A ist ein Aufnehmer und eine Schaltungsanordnung für eine Garnüberwachungseinrichtung beschrieben, an der der Faden vorbeigeführt wird und die eine regelmäßige Gitterstruktur sowie einen Differenzverstärker, an dem ein Spannungsverlauf abnehmbar ist enthält. Zwei Gruppen von Gitterstäben sind als gitterförmige Elektrodenanordnung bestehend aus elektrisch leitenden, aber gegeneinander durch eine nichtleitende Zwischenzone getrennten Gitterstäben, welche parallel zueinander in der Nähe des Fadens in einem Berührung vermeidenden Abstand angeordnet sind, wobei die Gitterstäbe
- quer zur Achse des Fadens ausgerichtet und
- in axialer Fadenlaufrichtung aneinandergereiht sind,
- in Gruppen untereinander elektrisch leitend verbunden sind, wobei sich in axialer Fadenlaufrichtung jeweils ein Gitterstab einer Gruppe und ein Gitterstab einer anderen Gruppe miteinander abwechseln,
- in fester geometrischer Zuordnung zum vorbeilaufenden Faden angeordnet und
- in periodisch wiederkehrender Reihenfolge aneinandergereiht und
- mindestens in jeder Gruppe untereinander gleichartig sind.

Bei dieser Lösung wird jedoch zum Spannungsverlauf außer bezüglich seiner Amplitude (level) respektive bezüglich in einem level detector ausgelöster Pulse, über deren gegenseitigen Abstand nichts ausgesagt ist, keine andere Signaleigenschaft festgestellt oder ausgewertet. Quantitative Aussagen über Messgrößen, die den Fadenbewegungszustand betreffen, werden auch ansonsten nicht abgeleitet.

Lediglich auf dem Gebiet der optischen Verfahren zur Geschwindigkeitsmessung war spätestens seit der Schrift DE 21 60 877 bekannt, wie mit einem einzigen optoelektronischen Aufnehmer, ein periodisches Signal mit einer zur Bewegungsgeschwindigkeit proportionalen Frequenz gewonnen wird. Hauptbestandteil einer solchen Einrichtung ist ein optisches Gitter, welches über Zwischenschritte eine Aufnahmecharakteristik mit einer periodisch wechselnden Empfindlichkeit gegenüber Lichtstrahlen verkörpert.
Ein entscheidender Nachteil solcher optischer Verfahren besteht jedoch neben den unvermeidbar relativ hohen Kosten und der Verschmutzungsgefahr auch noch darin, daß das vorbeilaufende Objekt immer eine ausreichende Oberflächen-Strukturierung zur Gewährleistung eines stark wechselnden Licht-Intensitätsverlaufes aufweisen muß, die zum Beispiel bei völlig glatten Fäden nicht da ist.

Die Verwendung von Aufnehmern mit einer an das Gitter erinnernden Aufnahmecharakteristik ist in anderen Fachgebieten ebenfalls seit langem bekannt.
Beispielsweise innerhalb der Auswertung elektrischer Felder wurden Elektrodenstrukturen mit örtlich wechselnder Empfindlichkeit gegenüber einer Influenzwirkung, und zwar in mehreren Schriften, beschrieben. Gitterstäbe im vorliegenden Sinn wären aus elektrisch leitendem Material ausgeführt, aber jeweils durch eine nichtleitende Zwischenzone voneinander getrennt, und nahe dem Objekt angeordnet. Ein Aufnehmer nach DE 38 07 355 dient der Erfassung von Ladungen an Textil- oder anderen Werkstoffen oder, hinsichtlich eines vorbeilaufenden Objektes, höchstens der Signalgewinnung mit zwei gleichartigen Aufnehmern zur Weiterverarbeitung mit einem Korrelator. Eine weitere Elektrodenstruktur, die gitterartig ausgebildet sein könnte, wird in DE 29 48 660, betreffend die Erfassung der Ladung einer Oberfläche, vorgestellt. Auch eine Elektrodenstruktur nach DE 42 19 378, bei der sogar die leitende Verbindung zwischen Elektrode und Objekt vorgesehen ist, bezieht sich auf die hochauflösende Erfassung flächenhafter Potentialverteilungen an einem gegenüber der Elektrodenstruktur feststehenden Objekt. Letzteres trifft abschließend auch auf eine Anordnung nach DE 34 10 527 zu, obwohl hier sogar eine (allerdings schwingende) Relativbewegung zwischen Faden und einem Teil der Elektrodenstruktur, und damit keine fest bleibende geometrische Zuordnung zum Faden, vorliegt. Das Vorbeiführen eines Fadens ist in allen drei letztgenannten Schriften nicht vorgesehen.
Insgesamt betrachtet hat die Kenntnis über gitterförmige elektrostatische Aufnehmer bisher nicht zu deren Verwendung für ein elektrostatisches Meßverfahren für die axiale Bewegung eines Fadens nach der Ortsfilter-Methode geführt. Dies ist nach wie vor ein seit langer Zeit bestehendes, anhaltendes Bedürfnis, insbesondere weil die Nachteile bisher bestehender Verfahren und Methoden in vielen an sich erforderlichen Fällen einen Einsatz nicht gestattet haben.

Die Aufgabe der Erfindung besteht darin, die Nachteile der bisher bekannten Verfahren zur berührungslosen Geschwindigkeits- oder Lauflängenmessung an Fäden oder zur Auswertung der Fadenbewegung an sich, beides in axialer Fadenlaufrichtung betrachtet, zu vermeiden und im besonderen für die axiale Fadenbewegung ein Verfahren zur Ausführung der Ortsfilter-Methode nach einem nichtoptischen Wirkprinzip zu schaffen, sowie Mittel zur Durchführung dieses Verfahrens vorzuschlagen.

Erfindungsgemäß zeichnet sich hierfür ein Verfahren mit Erfassung des längs des Fadens veränderlichen Anteils der natürlichen, auf dem Faden regellos angeordneten, Fadenladungen mittels der von diesem ausgehenden Influenzwirkung, unter Anwendung einer relativ zum Faden feststehenden Elektrodenanordnung als Bestandteil eines Aufnehmers, mit in axialer Fadenlaufrichtung wechselnder Empfindlichkeit gegenüber der Influenzwirkung, zur Erzeugung einer wechselnden Gesamtladung mindestens in einem Teil der Elektrodenanordnung, dadurch aus, daß der Faden an einem einzigen Aufnehmer mit in axialer Fadenlaufrichtung ortsbezogen periodisch wechselnder Empfindlichkeit gegenüber der Influenzwirkung vorbeibewegt wird, wobei die in Anspruch 1 genannten Verfahrensschritte ausgeführt werden.

Gemäß dem bekannten Stand der Technik wird eine wechselnde Gesamtladung mit Hilfe eines Ladungsverstärkers in Spannungsschwankungen umgewandelt und wahlweise auch mittels einer Schaltungsanordnung zu einem Nutzsignal noch in irgendeiner Weise weiterverarbeitet.

Innerhalb der vorliegenden Erfindung wird ein besonderer Verfahrensschritt vorgeschlagen, der durch schrittweises Heraushebung der Hauptkomponente aus dem das Signal verkörpernden Frequenzgemisch einschließlich der Vermeidung oder Unterdrückung von noch enthaltenen Störungen gekennzeichnet ist.

Weitere Verfahrensschritte innerhalb der Erfindung dienen der Auswertung der Gesamtladung oder des Nutzsignals. Diese Schritte sind gekennzeichnet dadurch, daß mittels einer Auswertebaugruppe eine mit der Frequenz (f_{H}) der Hauptkomponente der Gesamtladung durch eine mathematische Beziehung verknüpfte Größe, insbesondere die axiale Geschwindigkeit oder die Lauflänge des Fadens errechnet oder andersartig hergestellt und, wahlweise, zur Anzeige gebracht wird, oder die Überschreitung eines Schwellwertes der annähernd periodisch wiederkehrenden und dabei ungefähr gleichbleibenden Amplitude der Gesamtladung oder des Nutzsignals detektiert und, wahlweise, zur Anzeige gebracht wird.

Insgesamt ist damit der grundsätzliche Mangel überwunden, daß bisher überhaupt noch nicht bekannt geworden ist, wie durch nichtoptische Aufnehmer ein Signal von einem laufenden Faden abgenommen werden kann, das in seiner Beschaffenheit den Anforderungen speziell der direkten Messung der axialen Fadenlaufgeschwindigkeit und mit ihr verknüpfter anderer Größen, nach der Ortsfilter-Methode, genügt. Der bisher übliche Umweg z.B. über einen Korrelator ist damit nicht mehr notwendig.

Indem sich überdies die auf der Wellennatur des Lichtes beruhenden physikalischen Gesetze der Abbildung und Lichübertragung nicht etwa ohne weiteres auf Felder, wie eben auf das elektrostatische Feld, übertragen ließen, werden mit der Erfindung durch deren grundlegend anderes physikalisches Prinzip auch überhaupt neue und einfachere Wege der Signalverarbeitung eröffnet.

Mit dem neuen Verfahren ist somit auch eine entscheidende Kostensenkung, etwa um nochmals eine Größenordnung gegenüber dem bekannten Stand der Technik, erreichbar. Schon wegen der notwendigen Beleuchtungseinrichtungen ist demgegenüber eine Anordnung nach dem herkömmlichen optischen Ortsfilter-Verfahren auch bei einfachster Ausführung, unabdingbar nicht besonders kostengünstig. Weiterhin ist ein nichtoptisches Verfahren weitestgehend unabhängig von der Verschmutzung. Schließlich gibt es an die Oberflächenstruktur des Fadens keinerlei Anforderungen.

Innerhalb des Fachgebietes Optik war die Verwendung von Gittern, z.B. als Beugungsgitter, seit langem bekannt, nicht aber von Anfang an deren Verwendbarkeit für ein Geschwindigkeitsmeßverfahren. Nachdem die im Stand der Technik beispielhaft aufgeführten gitterähnlichen Elektrodenanordnungen, bis dato in vergleichbarer Weise auch noch nicht zur Anwendung auf die Messung der axialen Fadenlaufgeschwindigkeit mittels der Ortsfilter-Methode nach dem elektrostatischen Prinzip geführt haben, obwohl sie ebenfalls seit langem bekannt waren, wird dies mit dem neuen Verfahren nunmehr erreicht.

Ein nach den Merkmalen des Oberbegriffs des Anspruchs 5 bekannter Aufnehmer ist an sich aus der US 3 927 356 A bekannt, dient jedoch einem anderen Verwendungszweck.

Die demgemäß vorgeschlagenen Elektrodenstrukturen lassen sich bekanntlich , z.B. in Form von Leiterplatten oder sonstigen lithografisch erzeugten Leiterzügen, wesentlich einfacher praktisch realisieren als optische Anordnungen mit ihren teuren Komponenten, wie Linsen usw., was in einer extrem einfachen, also extrem kostengünstigen, Ausführbarkeit auch der anzuwendenden technischen Mittel zum Ausdruck kommt. Aus der Einfachheit ergibt sich folgerichtig auch ein Zuwachs an Funktionssicherheit beziehungsweise an Zuverlässigkeit im allgemeinen.
Weitere Merkmale der vorgesehenen Lösung bestehen durch Ausnutzung der sich eröffnenden technologischen Möglichkeiten (vgl. z.B. zwei- und mehrlagige Leiterplatten), darin, daß die Gitterstäbe
- unterschiedlichen Abstand zum Faden aufweisen oder daß
- die Gitterstäbe der einen Gruppe und der anderen Gruppe in verschiedenen Ebenen angeordnet sind oder daß
- alle Gitterstäbe in der gleichen Ebene angeordnet sind.

Es wurde gefunden, daß sich für den Aufnehmer eine Elektrodenanordnung besonders gut zur Bewegungsmessung nach der Ortsfilter-Methode eignet, bei der die Gitterstäbe in an sich aus DE 42 19 378 bekannter Weise angeordnet sind. Dies ist jedoch noch nicht hinreichend und auch nicht in jedem Fall zweckmäßig für die Erfüllung der erfindungsgemäßen Aufgabe. Während die längs eines Fadens regellos angeordneten Fadenladungen von sich aus einen stark wechselnden Verlauf zeigen, wird in einer als einfaches Gitter ausgebildeten Elektrodenstruktur allein noch keine auswertbare wechselnde Gesamtladung festgestellt. Dies ergibt sich u.a. aus der Wechselwirkung zwischen dem vom Faden ausgehenden Feld mit dem dadurch verursachten von der Elektrodenstruktur ausgehenden Feld. Wie hinreichend bekannt ist, kann deshalb im allgemeinen auch z.B. hinter einem einfachen Gitter gar keine Feldwirkung mehr ausgewertet werden, sobald das Gitter als faradayscher Käfig wirkt. Dies konnte durch die entsprechende zweckmäßige Gestaltung des Gitters grundsätzlich vermieden werden.

Eine weitere zweckmäßige Ausführung des erfindungsgemäßen Aufnehmers zeichnet sich deshalb insbesondere dadurch aus, daß die Gitterstäbe gekrümmt sind, wobei sie den Faden ganz oder teilweise umschließen, und daß sie anstatt in Ebenen auf Zylindermantelflächen angeordnet sind.

Weitere Merkmale der erfindungsgemäßen Lösung betreffen die Weiterverarbeitung der durch den Aufnehmer gelieferten angenähert periodischen schwankenden Gesamtladung zu einem Nutzsignal mittels einer entsprechenden Schaltungsanordnung.

Eine dahingehende zweckmäßige Ausführungsform der erfindungsgemäßen Anordnung, mit zwei Gruppen von Gitterstäben, zeichnet sich dadurch aus, daß die Gitterstäbe der einen Gruppe, in an sich aus DE 42 19 378 wie auch aus DE 44 08 312 A1 bekannter Weise, mit Massepotential und die der anderen Gruppe mit dem Eingang eines Verstärkers verbunden sind. In der vorliegenden Erfindung ist der Verstärker ein Ladungsverstärker.
Die Wirkung einer solchermaßen getroffenen Anordnung besteht im Sinne der Erfindung, über die oben genannten Schriften hinausgehend, darin, daß die mit Massepotential verbundenen Gitterstäbe noch eine neue Funktion bezüglich der zu erreichenden Güte des Nutzsignals haben. Fremdfelder werden abgeschirmt, und es werden der konstante Anteil wie auch störende niederfrequente Anteile aus dem Ladungsverlauf auf dem Faden unterdrückt.

Eine andere zweckmäßige Ausführungsform der erfindungsgemäßen Anordnung hat als Kennzeichen, daß die Gitterstäbe der einen Gruppe mit dem positiv bewertenden Eingang und die Gitterstäbe der anderen Gruppe mit dem negativ bewertenden Eingang eines Differenzverstärkers verbunden sind.
Die Wirkung dieser Anordnung besteht im Sinne der Erfindung darin, daß sich durch die Differenzbildung störende Anteile, die von beiden Gruppen von Gitterstäben gleichartig aufgenommen werden, gegenseitig kompensieren, was ebenfalls einer Unterdrückung von andernfalls im Nutzsignal enthaltenen Störungen entspricht.

Eine weitere erfindungsgemäße Ausführungsform, mit einem Differenzverstärker, der Widerstände mit jeweils zwei Anschlüssen enthält, ist dadurch gekennzeichnet, daß der Differenzverstärker als eine nur einen Operationsverstärker enthaltende Ladungs-Differenzverstärker-Schaltung ausgebildet ist, mit einem Kondensator im invertierenden Rückführzweig und einem ersten Widerstand, dessen erster Anschluß mit dem invertierenden Eingang des Operationsverstärkers verbunden ist und dessen anderer Anschluß der negativ bewertende Eingang der Differenzverstärker-Schaltung ist, sowie wahlweise mit einem weiteren Widerstand, dessen seinerseits erster Anschluß mit dem nichtinvertierenden Eingang des gleichen Operationsverstärkers verbunden ist und dessen anderer Anschluß der positiv bewertende Eingang der Differenzverstärker-Schaltung ist, oder ohne diesen weiteren Widerstand, indem der nichtinvertierende Eingang des Operationsverstärkers zugleich der positiv bewertende Eingang der Differenzverstärker-Schaltung ist.

Die erfindungsgemäße Schaltungsanordnung weist ferner Merkmale auf, die auf die Weiterverarbeitung des Spannungssignals mit Mitteln der elektronischen Signalverarbeitung, und dabei insbesondere zur Separierung der Hauptkomponente des Nutzsignals, ausgerichtet sind.

Eine demgemäße Ausführung weist als Kennzeichen auf, daß als ein erstes solches Mittel ein Phasenregelkreis (PLL-Schaltung), welcher der Ausgabe einer mit der Frequenz der Hauptkomponente des Nutzsignals oszillierenden Wechselspannung beliebiger Form, insbesondere als Sinusschwingung oder als Rechteckimpulsfolge, oder einer zu dieser Frequenz proportionalen Gleichspannung dient, mit dem Ausgang des Verstärkers oder des Differenzverstärkers verbunden ist.
Die Wirkung der PLL-Schaltung besteht hier anders als in DD 262 683 nicht vordringlich in einer Frequenz - Auswertung, sondern nutzt vor allem die Fähigkeit der PLL, einsetzbar zu sein als ein bei variierender Frequenz selbstnachstimmendes und damit schmalbandig gestaltbares Filter, was der Heraushebung der Hauptkomponente besonders dienlich ist.

Weitere Merkmale betreffen die Gestaltung der erfindungsgemäßen Lösung, unter Verwendung von Aufnehmer und Ladungsverstärker u. dgl. sowie eines noch ausstehenden Bestandteils, das als Auswertebaugruppe bezeichnet wird, für das Herstellen oder Anzeigen einer mit der Frequenz der Hauptkomponente des Nutzsignals durch eine mathematische Beziehung verknüpfte Größe, insbesondere der Geschwindigkeit oder der Lauflänge des Fadens oder das Detektieren der Überschreitung eines Schwellwertes der Nutzsignalamplitude zwecks Detektion oder Anzeige der axialen Fadenbewegung an sich.

Gemäß einem solchen Merkmal der Erfindung ist die Signalverarbeitung so erweitert oder gestaltet, daß innerhalb des Signalflusses bzw. der Wirkungskette zwischen Aufnehmer und Auswertebaugruppe oder dem Phasenregelkreis mindestens eine der Signalverarbeitungsschaltungen Frequenzfilter, Regelverstärker, Schwellwertschalter und Präzisionskomparator vorgesehen sind.

Eine diesbezügliche erfindungsgemäße Ausführung der Schaltungsanordnung ist dadurch gekennzeichnet, daß zum Herstellen oder Anzeigen der Größen axiale Fadengeschwindigkeit oder Lauflänge des Fadens als Auswertebaugruppe ein Impulszähler zum Hochzählen der Perioden der Hauptkomponente, respektive der Impulse einer vom Schwellwertschalter , vom Präzisionskomparator oder vom Phasenregelkreis abnehmbaren Rechteckimpulsfolge, vorgesehen ist.

Eine andere erfindungsgemäße Lösung weist als Kennzeichen auf, daß zum Berechnen einer durch eine mathematische Beziehung mit der Frequenz der Hauptkomponente verknüpften, anzuzeigenden Größe ein Mikroprozessor, der mit dem Ausgang des Schwellwertschalters, des Präzisionskomparators oder des Phasenregelkreises verbunden ist, elektrisch leitend verbunden ist.

In einer weiteren Ausführung gemäß der Erfindung besteht das Kennzeichen darin, daß zum Detektieren der Überschreitung der Nutzsignalamplitude als Auswertebaugruppe ein Einrastender Phasenregelkreis (17a) mit dem Aufnehmer nach einem der Ansprüche 5 bis 9 oder mit der Schaltungsanordnung nach einem der Ansprüche 10 bis 14 elektrisch leitend verbunden ist.

Die besondere Wirkung der Schwellwertüberschreitung, durch ein im besonderen ungefähr periodisches Nutzsignal, besteht in einer Zunahme an Funktionssicherheit (sowohl Ansprechals auch Störsicherheit). Dies ist gewährleistet indem, durch aufeinanderfolgende etwa gleich hohe Maxima im Signalverlauf, auch bei geringer Signalleistung immer wieder diese Schwelle überschritten wird, was demgegenüber mit einem regellosen Signal gemäß bisherigem Stand der Technik, mit nur einzelnen herausragenden Signalspitzen, nur hin und wieder erfolgen würde. Periodische Schwankungen im Nutzsignal lassen sich mit Hilfe einer PLL-Schaltung in besonders günstiger Weise von anderen, durch störende äußere Einwirkungen verursachten Signalspitzen (z.B. als Nadelimpulse bekannt) unterscheiden, was einer wesentlich erhöhten Störsicherheit gleichkommt und was bisher bei der Auswertung eben der axialen Fadenbewegung noch nirgends in dieser Weise erfolgen konnte.

Die Verwendung einer PLL-Schaltung ist hier in dem Sinne neu, daß das Verfahren selbst neu ist und daß PLL-Schaltungen in der Technik einen sehr großen Anwendungsbereich haben, wo nicht von vornherein feststeht, ob sie im einzelnen für den speziellen Zweck einen Vorteil bringen.
Die Erfindung wird nachfolgend an Hand von Ausführungsbeispielen näher erläutert. In den Zeichnungen zeigen:
- Fig.1: eine Schnittdarstellung eines Aufnehmers mit zwei Gruppen von Gitterstäben bei innerhalb einer Gruppe gleichem Abstand zum Faden
- Fig.2: eine Draufsicht auf einen Aufnehmer gemäß Fig. 1
- Fig.3: einen Verlauf der regellos auf dem Faden angeordneten natürlichen Ladungen
- Fig.4: einen Verlauf der Gesamtladung an der Elektrodenanordnung
- Fig.5: eine spektrale Darstellung der feststellbaren Gesamtladung
- Fig.6: eine Schnittdarstellung eines Aufnehmers mit unterschiedlichem Abstand der Gitterstäbe zum Faden
- Fig.7: eine perspektivische Darstellung eines Aufnehmers mit gekrümmten Gitterstäben
- Fig.8: eine Schnittdarstellung eines Aufnehmers, letzterer verbunden mit Masse und Verstärkereingang
- Fig.9: eine Schnittdarstellung eines Aufnehmers, verbunden mit einem Differenzverstärker
- Fig.10: eine Ladungs-Differenzverstärker-Schaltung
- Fig.11: einen Wirkungsplan einer Einrichtung zur Weiterverarbeitung des Nutzsignals bis zum Anzeigen der Lauflänge
- Fig.12: einen Wirkungsplan einer Einrichtung zum Berechnen einer anderen Größe
- Fig.13: einen Wirkungsplan einer Einrichtung zum Detektieren einer Schwellwertüberschreitung.

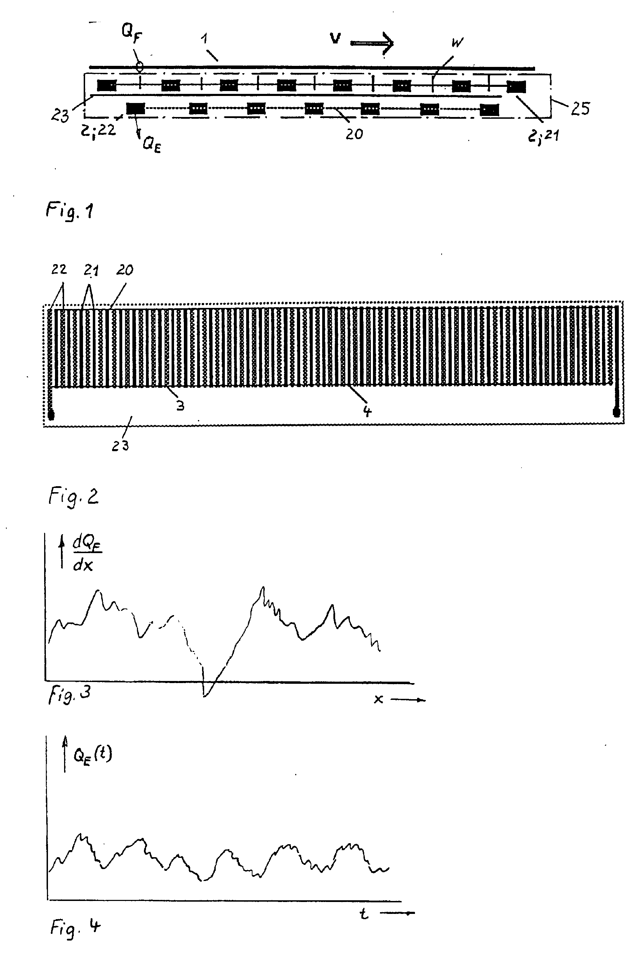

Gemäß Fig. 1 sind Gitterstäbe **2,** die entsprechend ihrer Ausrichtung quer zum Faden **1** geschnitten dargestellt sind, in zwei Gruppen **21** und **22** in jeweils gleichbleibendem Abstand zum bewegten Faden angeordnet, der mit seiner Ladung **Q_{F}** eine Influenzwirkung **w** auf den Aufnehmer **25** und insbesondere auf die Gitterstäbe **2** ausübt. Alle Gitterstäbe sind in periodisch wiederkehrender Reihenfolge aneinandergereiht. Die untereinander gleichartigen Gitterstäbe einer Gruppe **21** oder **22** sind jeweils durch eine leitende Verbindung **20** miteinander verbunden. Indem zwischen den beiden Gruppen ein Träger **23** aus nichtleitendem Material eingefügt ist, sind die Gitterstäbe der beiden Gruppen immer durch eine nichtleitende Zwischenzone voneinander getrennt. Der Aufnehmer **25** ist die Kombination einer Elektrodenanordnung, letztere gebildet aus den miteinander verbundenen Gitterstäben **2**, mit dem Träger **23**.

Aus Fig. 2 ist ersichtlich, wie die durch Verbindung **20** miteinander elektrisch leitend verbundenen Gitterstäbe der Gruppe **21** auf der Oberseite (erste Ebene **3**) und die anderen, ebenfalls miteinander verbundenen Gitterstäbe der Gruppe **22** auf der Unterseite (zweite Ebene **4**) eines isolierenden Trägers **23**, beispielsweise einer Leiterplatte,angeordnet sind. Die geometrische Zuordnung zum Faden **1** ist auch für einen so ausgeführten Aufnehmer gleichbleibend.
Falls alle Gitterstäbe auf der gleichen Seite der Leiterplatte angebracht sind (nicht dargestellt), ergibt sich das gleiche Bild wie in einer aus DE 42 19 378 an sich bekannten Anordnung, die aber in der vorliegenden Erfindung für einen völlig andersartigen Zweck eingesetzt wird.

Wie in Fig. 3 beispielhaft dargestellt, sind die natürlichen Ladungen **Q_{F}**, die der Faden trägt, ortsbezogen völlig regellos angeordnet. Die Abszisse des Diagrammes Fig.3 ist die Ortskoordinate **x** längs eines Fadenabschnittes. Die Ordinate ist die Ladungsdichte, also Ladung dQ_{F} je differentiell kleines Fadenstück dx.

Indem der Faden an einer einzigen Elektrodenanordnung, die eben erfindungsgemäß mit in axialer Fadenlaufrichtung periodisch wechselnder Empfindlichkeit gegenüber den von den Fadenladungen ausgehenden Influenzwirkung ausgestattet ist, in Richtung der Fadenachse vorbeibewegt wird, gelingt die Erzeugung einer zeitbezogen annähernd periodisch wechselnden Gesamtladung **Q_{E}** in der Elektrodenanordnung Ein Zeitverlauf dieser Gesamtladung **Q_{E}** ist in Fig. 4 exemplarisch dargestellt. Von der durchaus erkennbaren und dominierenden periodischen Hauptkomponente gibt es hier noch viele Abweichungen.

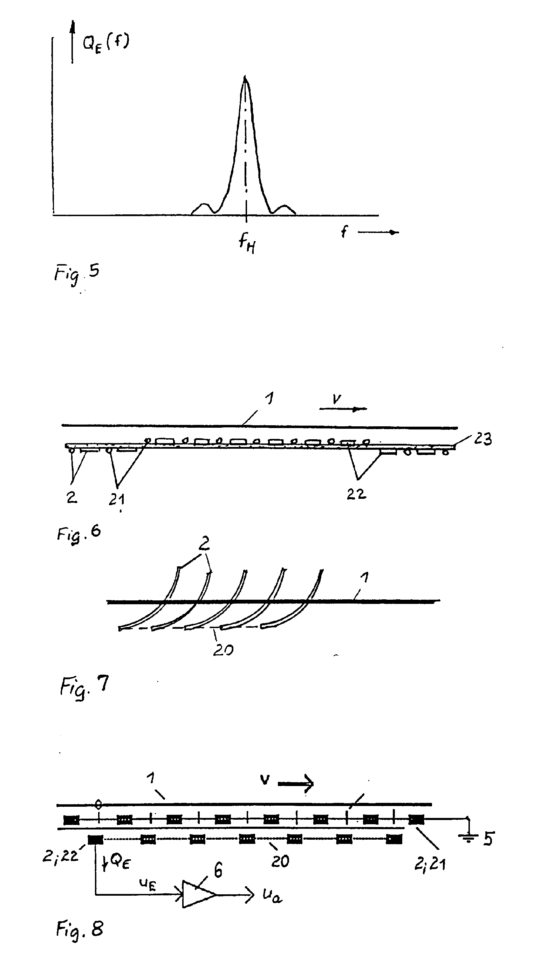

In einer spektralen Darstellung dieses Verlaufs gemäß Fig. 5 äußern sich diese Abweichungen als ein um die Hauptkomponente mit der Frequenz (**f_{H}**) konzentriertes, aber erfindungsgemäß zumindest schmalbandiges, Frequenzgemisch.

Fig. 6 zeigt, wie Gitterstäbe **2** der gleichen Gruppe **21** oder auch der Gruppe **22** in unterschiedlichem Abstand zum Faden **1** angelegt sind. Sofern Gitterstäbe untereinander gleichen Abstand zum Faden haben, sind diese in der gleichen Ebene angeordnet.

Aus Fig. 7 ist zu ersehen, wie der Faden **1** durch gekrümmte Gitterstäbe **2** teilweise umschlossen wird. Sind die Gitterstäbe jeweils als geschlossene Ringe ausgebildet, so wird der Faden von ihnen ganz umschlossen.

In Fig. 8 sind die Gitterstäbe **2** der Gruppe **21** mit dem Masseanschluß **5** verbunden und weisen dadurch ein gleichbleibendes, von den Fadenladungen **Q_{F}** unabhängiges, Massepotential auf Die Gitterstäbe **2** der Gruppe **22** sind dagegen mit dem Eingang eines Verstärkers **6** verbunden. Dessen auf Massepotential bezogene Eingangsspannung **uₑ** ist, bei genügend hohem Verstärker-Eingangswiderstand, der Ladung **Q_{E}** auf der Elektrodenanordnung, die durch die Gitterstäbe der Gruppe **22** gebildet wird, proportional. Die beim Vorbeilaufen des Fadens **1** angenähert periodisch wechselnde Gesamtladung **Q_{E}** auf der Elektrode wird somit in periodische Spannungsschwankungen umgewandelt, die am Ausgang des als Ladungsverstärker wirkenden Verstärkers **6** als ein gegen **uₑ** viel größeres Nutzsignal **uₐ** abnehmbar sind.

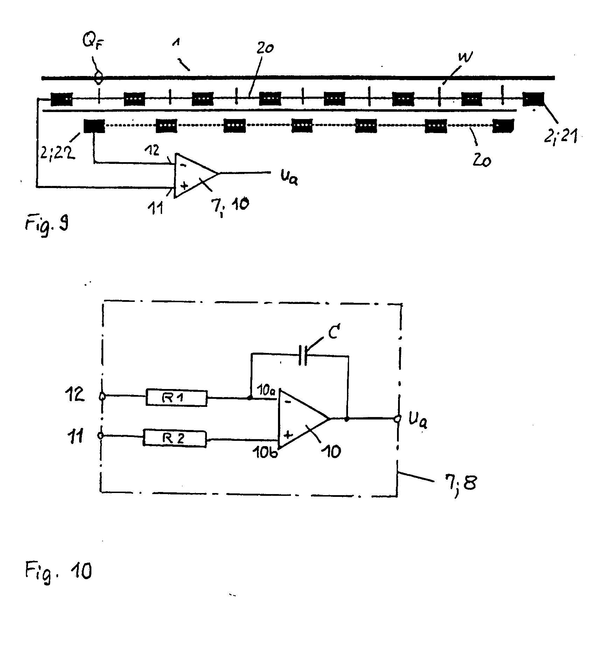

Aus Fig. 9 ist ersichtlich, wie die Gitterstäbe **2** der Gruppe **21** mit dem positiv bewertenden Eingang **11** eines als Ladungsverstärker wirkenden Differenzverstärkers **7** verbunden sind, der im besonderen nur einen Operationsverstärker **10** enthält. Demgemäß sind die Gitterstäbe **2** der Gruppe **22** mit dem negativ bewertenden Eingang **12** des Differenzverstärkers **7** verbunden.

Die Schaltung in Fig. 10 stellt eine Ladungs-Differenzverstärker-Schaltung mit nur einem Operationsverstärker **10** dar. In Gestalt eines invertierenden Rückführzweigs ist der Kondensator **C** an seinem ersten Anschluß mit dem Ausgang und an seinem zweiten Anschluß zugleich mit dem Widerstand **R₁** und mit dem invertierenden Eingang **10a** des Operationsverstärkers **10** verbunden. Der andere Anschluß des Widerstandes **R₁** ist der negativ bewertende Eingang **12** der Ladungs-Differenzverstärker-Schaltung **8** Der Widerstand **R₂** ist mit einem Anschluß mit dem nichtinvertierenden Eingang **10b** des Operationsverstärkers **10** verbunden und sein anderer Anschluß stellt den positiv bewertenden Eingang **11** der Ladungs-Differenzverstärker-Schaltung **8** dar. Wenn anstelle des Widerstandes **R₂** eine durchgehende Verbindung angelegt ist, ist der Eingang **10b** zugleich der positiv bewertende Eingang **11** der Ladungs-Differenzverstärker-Schaltung **8**.

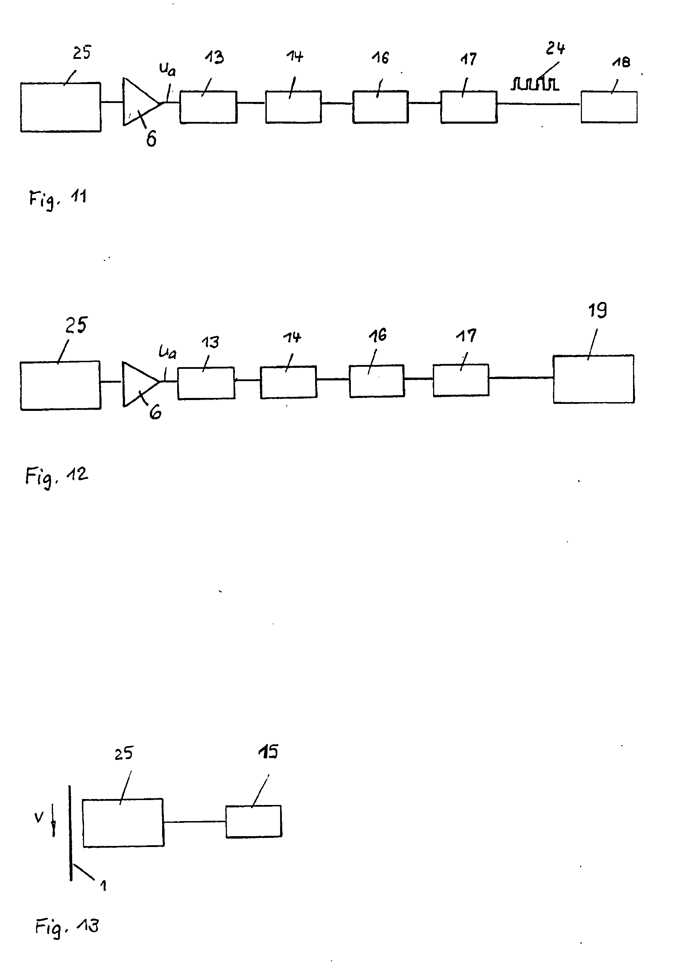

Fig. 11 als Wirkungsplan einer Weiterverarbeitungseinrichtung für das Nutzsignal enthält innerhalb einer Wirkungskette die Blöcke Frequenzfilter **13**, Regelverstärker **14**, Präzisionskomparator **16**, Phasenregelkreis (PLL) **17** und Impulszähler **18**. Der Eingang des Frequenzfilters **13** ist mit dem Ausgang des Verstärkers **6** verbunden, wo die näherungsweise periodisch schwankende Spannung **uₐ** abgenommen wird und der seinerseits nach dem Aufnehmer **25** angeordnet ist. Das Frequenzfilter **13** unterdrückt vermittels seines Übertragungsverhaltens einen Teil des in Fig.5 dargestellten Frequenzgemischs, außerhalb der Hauptkomponente des Nutzsignals uₐ, so daß sich dieses noch besser einem periodischen Verlauf annähert. Der Regelverstärker **14** gleicht Schwankungen der Amplitude im Spannungssignal aus. Der Präzisionskomparator **16** bewirkt in der Regel bei einem Nulldurchgang der Hauptkomponente **f_{H}** ein Umschalten seines diskreten Ausganssignals, verhindert aber durch seine, einstellbare, Schaltdifferenz ein kurzzeitiges Zurückschalten bei noch verbliebenen höherfrequenten störenden Signalanteilen aus dem ursprünglichen Frequenzgemisch. Der Phasenregelkreis **17** generiert an seinem Ausgang eine Rechteckimpulsfolge **24** entsprechend den Perioden der Hauptkomponente mit der Frequenz **f_{H}**, wobei gemäß der Spezifik des vorliegenden Signals anders als in DD 262 683, basierend auf der verallgemeinerten Betrachtung der Filterwirkung einer PLL-Schaltung, Schwankungen im Nutzsignal (z.B. sogar fehlende Schwingungsperioden) zu einem großen Teil ausgeglichen (bzw. regeneriert) werden, und die PLL generiert an einem anderen Ausgang eine dazu proportionale Gleichspannung **u**. Obwohl nicht dargestellt, kann die Reihenfolge und die Auswahl der Blöcke auch anders sein.

Im Ausführungsbeispiel zählt ein Impulszähler die ausgegebenen Impulse der Rechteckimpulsfolge **24** als ein direktes Maß der Lauflänge des durchgelaufenen Fadens. Obgleich nicht näher dargestellt, kann der Zähler **18** auch schon an den jeweiligen Ausgang des Präzisionskomparators **16** angeschlossen sein. Falls eine niedrigere Genauigkeit der Messung ausreichend ist, kann der Präzisionskomparator **16** durch einen hier nicht dargestellten einfachen Schwellwertschalter **15** ersetzt sein.

In Fig. 12 ist anstelle des Zählers in Fig. 11 an den Phasenregelkreis **17** ein Mikroprozessor **19** angeschlossen, der sowohl die Zählfunktion übernehmen als auch, nach einer einprogrammierten Rechenvorschrift, eine, durch eine mathematische Beziehung mit der Frequenz **f_{H}** der Hauptkomponente verknüpfte, anzuzeigende Größe berechnen kann.

Mit Fig. 13 ist eine einfache Einrichtung zum Detektieren und Anzeigen der Fadenbewegung an sich dargestellt, die als Blöcke nur noch den Aufnehmer **25** für die vom Faden **1** ausgehende Influenzwirkung und den Schwellwertschalter **15** enthält. Die Anzeige erfolgt entsprechend dem Umschalten des Ausgangssignals am Schwellwertschalter **15**. Zur Erhöhung der Funktionssicherheit kann, ohne nähere Darstellung, der Schwellwertschalter **15** durch einen Einrastenden Phasenregelkreis **17a** ersetzt sein, der in bekannter Weise eine Anzeige für den eingerasteten Zustand, zB. eine LED, enthält.

### Bezugszeichenliste

- E: Elektrodenanordnung
- C: Kondensator
- R: Widerstand
- Q_{F}: Ladung auf dem Faden
- Q_{E}: Ladung auf der Elektrodenanordnung
- f_{H}: Frequenz der Hauptkomponente
- t: Zeitkoordinate
- u: elektr. Spannung
- uₑ: Eingangsspannung
- uₐ: Ausgangsspannung, Nutzsignal
- uₛ: Schwellwert
- v: Fadengeschwindigkeit in axialer Fadenlaufrichtung
- w: Influenzwirkung
- x: Ortskoordinate

- 1: bewegter Faden
- 2: Gitterstab
- 3: erste Ebene
- 4: zweite Ebene
- 5: Masseanschluß, Massepotential
- 6: Verstärker
- 7: Differenzverstärker
- 8: Ladungs- Differenzverstärker-Schaltung
- 9: Rückführzweig
- 10: Operationsverstärker (OPV)
- 10a: invertierender Eingang des OPV
- 10b: nichtinvertierender Eingang des OPV
- 11: positiv bewertender Eingang
- 12: negativ bewertender Eingang
- 13: Frequenzfilter
- 14: Regelverstärker
- 15: Schwellwertschalter
- 16: Präzisionskomparator
- 17: Phasenregelkreis (PLL-Schaltung)
- 17a: Einrastender Phasenregelkreis
- 18: Impulszähler
- 19: Mikroprozessor
- 20: elektrisch leitende Verbindung
- 21: eine erste Gruppe von Gitterstäben
- 22: eine zweite Gruppe von Gitterstäben
- 23: isolierender Träger
- 24: Rechteckimpulsfolge
- 25: Aufnehmer

## Patentansprüche

1. Verfahren zum berührungslosen Messen der axialen Geschwindigkeit oder der Lauflänge eines textilen Fadens, zur Detektion oder zum Anzeigen von dessen axialer Bewegung, durch Erfassen des längs des Fadens veränderlichen Anteils der natürlichen, auf dem Faden regellos angeordneten Fadenladungen mittels der von diesen ausgehenden Influenzwirkung, bei dem der Faden (1) an einem einzigen Aufnehmer (25), enthaltend eine Elektrodenanordnung mit in axialer Fadenlaufrichtung ortsbezogen periodisch wechselnder Empfindlichkeit gegenüber der Influenzwirkung, vorbeiläuft und eine wechselnde Gesamtladung mindestens in einem Teil der Elektrodenanordnung erzeugt,
**dadurch gekennzeichnet, dass**
- an dem Aufnehmer (25) ein zeitbezogen angenähert periodisches Wechseln seiner Gesamtladung erfasst wird, wobei der Zeitverlauf der Gesamtladung durch einen entsprechenden Verlauf einer anderen Größe, als Nutzsignal, in Erscheinung tritt,
- die wechselnde Gesamtladung an der Elektrodenanordnung als ein um eine Hauptkomponente konzentriertes schmalbandiges Frequenzgemisch festgestellt wird, wobei die Frequenz (f_{H}) dieser Hauptkomponente der axialen Geschwindigkeit des vorbeibewegten Fadens proportional ist, und
- das periodische Wechseln der Gesamtladung zur Bestimmung der axialen Geschwindigkeit oder der Lauflänge des Fadens, zur Detektion oder zum Anzeigen von dessen axialer Bewegung ausgewertet wird.

2. Verfahren nach Anspruch 1, **dadurch gekennzeichnet, dass**
- die angenähert periodisch wechselnde Gesamtladung in angenähert periodische Spannungsschwankungen als Nutzsignal umgewandelt wird und
- ein Teil des Frequenzgemisches außerhalb der Hauptkomponente unterdrückt wird.

3. Verfahren nach Anspruch 2, **dadurch gekennzeichnet, dass** eine mit der Frequenz (f_{H}) der Hauptkomponente des Nutzsignals durch eine mathematische Beziehung verknüpfte Größe, insbesondere die axiale Geschwindigkeit oder die Lauflänge des Fadens, zur Anzeige gebracht wird.

4. Verfahren nach Anspruch 2, **dadurch gekennzeichnet, dass** zur Detektion oder zum Anzeigen der axialen Bewegung des Fadens das periodische Wechseln des Nutzsignals detektiert und, wahlweise, zur Anzeige gebracht wird.

5. Aufnehmer zur Durchführung des Verfahrens nach einem der Ansprüche 1 bis 4 mit einer gitterförmigen Elektrodenanordnung bestehend aus elektrisch leitenden, aber gegeneinander durch eine nichtleitende Zwischenzone (23) getrennten Gitterstäben (2), welche parallel zueinander in der Nähe des Fadens (1) in einem Berührung vermeidenden Abstand angeordnet sind, wobei die Gitterstäbe
- quer zur Achse des Fadens (1) ausgerichtet und
- in axialer Fadenlaufrichtung aneinandergereiht sind,
- in Gruppen (21,22) untereinander elektrisch leitend verbunden sind, wobei sich in axialer Fadenlaufrichtung jeweils ein Gitterstab einer Gruppe und ein Gitterstab einer anderen Gruppe miteinander abwechseln,
- in fest bleibender geometrischer Zuordnung zum vorbeilaufenden Faden (1) angeordnet und
- in periodisch wiederkehrender Reihenfolge aneinandergereiht sind, und
- mindestens in jeder Gruppe (21,22) untereinander gleichartig sind,
**dadurch gekennzeichnet, dass**
- der Aufnehmer eine Schaltungsanordnung umfasst, wobei ein Phasenregelkreis (17) zur Ausgabe einer mit der Frequenz (f_{H}) der Hauptkomponente des Nutzsignals oszillierenden Wechselspannung, insbesondere als Sinusschwingung oder als Rechteckimpulsfolge, oder einer zu dieser Frequenz (f_{H}) proportionalen Gleichspannung, mit einem Verstärker (6) oder mit einem Differenzverstärker (7) verbunden ist.

6. Aufnehmer nach Anspruch 5 mit zwei Gruppen von Gitterstäben, **dadurch gekennzeichnet, dass** zur Umwandlung von Ladungs- in Spannungsschwankungen nach Anspruch 2 die Gitterstäbe (2) der einen Gruppe (21) mit Massepotential (5) und die der anderen Gruppe (22) mit dem Eingang eines als Ladungsverstärker wirkenden Verstärkers (6) verbunden sind.

7. Aufnehmer nach Anspruch 5 mit zwei Gruppen von Gitterstäben, **dadurch gekennzeichnet, dass** zur Umwandlung von Ladungs- in Spannungsschwankungen nach Anspruch 2 die Gitterstäbe (2) der einen Gruppe (21) mit dem positiv bewertenden Eingang (11) und die Gitterstäbe (2) der anderen Gruppe (22) mit dem negativ bewertenden Eingang (12) eines als Ladungsverstärker wirkenden Differenzverstärkers (7) verbunden sind.

8. Aufnehmer nach Anspruch 5, **dadurch gekennzeichnet, dass** der Differenzverstärker (7) als eine nur einen Operationsverstärker (10) enthaltende Ladungs-Differenzverstärker-Schaltung (8) ausgebildet ist, mit einem Kondensator (C) im invertierenden Rückführzweig und einem ersten Widerstand (R1), dessen erster Anschluss mit dem invertierenden Eingang (10a) des Operationsverstärkers (10) verbunden ist und dessen anderer Anschluss der negativ bewertende Eingang (12) der Ladungs-Differenzverstärker-Schaltung (8) ist, sowie wahlweise mit einem weiteren Widerstand (R2), dessen seinerseits erster Anschluss mit dem nichtinvertierenden Eingang (10b) des gleichen Operationsverstärkers (10) verbunden ist und dessen anderer Anschluss der positiv bewertende Eingang (11) der Ladungs-Differenzverstärker-Schaltung (8) ist, oder, ohne diesen weiteren Widerstand (R2), indem der nichtinvertierende Eingang (10b) des Operationsverstärkers (10) zugleich der positiv bewertende Eingang (11) der Ladungs-Differenzverstärker-Schaltung (8) ist.

9. Aufnehmer nach Anspruch 5, **dadurch gekennzeichnet, dass** zwischen Verstärker (6) bzw. Differenzverstärker (7) und dem Phasenregelkreis (17) ein Regelverstärker (14) und ein Schwellwertschalter (15) und/oder ein Präzisionskomparator (16) elektrisch leitend, und damit eine Wirkungskette bildend, eingefügt ist.

10. Aufnehmer nach Anspruch 5 oder 9, **dadurch gekennzeichnet, dass** zum Anzeigen der axialen Geschwindigkeit oder Lauflänge des Fadens ein Impulszähler (18) zum Hochzählen der Perioden der Hauptkomponente, respektive der Impulse einer vom Schwellwertschalter (15), vom Präzisionskomparator (16) oder vom Phasenregelkreis (17) abnehmbaren Rechteckimpulsfolge (24), vorgesehen ist.

11. Aufnehmer nach Anspruch 10, **dadurch gekennzeichnet, dass** zum Berechnen einer durch eine mathematische Beziehung mit der Frequenz (f_{H}) der Hauptkomponente verknüpften anzuzeigenden Größe, ein Mikroprozessor (19) mit dem Ausgang des Schwellwertschalters (15), des Präzisionskomparators (16) oder des Phasenregelkreises (17) elektrisch leitend verbunden ist.

12. Aufnehmer nach Anspruch 5 oder 9, **dadurch gekennzeichnet, dass** ein einrastender Phasenregelkreis vorgesehen ist.

## Claims

1. A method for non-contact measurement of the axial speed or running length of a textile yam, for detecting or indicating its axial movement, by capturing the portion of natural yam charges that is variable along the yarn and distributed in an unordered manner across the yam based on their influence effect, wherein the yam (1) passes a single pickup (25) containing an electrode arrangement with location-based, periodically varying sensitivity to the influence effect in axial direction of the yam path and generating a varying overall charge in at least one part of the electrode arrangement,
**characterized in that**
- the pickup (25) captures an approximately periodic variation of its overall charge in relation to time, wherein the variation of the overall charge over time manifests itself by a corresponding development of another variable as a useful signal,
- the varying overall charge is detected by the electrode arrangement as a narrowband frequency mixture focused around a main component, wherein the frequency (f_{H}) of this main component is proportional to the axial speed of the passing yam, and
- the periodic variation of the overall charge is evaluated to determine the axial speed or running length of the yarn for detecting or indicating its axial movement.

2. The method according to claim 1, **characterized in that**
- the approximately periodically changing overall charge is converted into approximately periodic voltage variations as a useful signal and
- a portion of the frequency mixture outside the main component is suppressed.

3. The method according to claim 2, **characterized in that** a variable linked by a mathematical relationship to the frequency (f_{H}) of the main component of the useful signal, in particular, the axial speed or running length of the yam, is displayed.

4. The method according to claim 2, **characterized in that** the periodic variation of the useful signal is detected and optionally displayed for detecting and indicating the axial movement of the yam.

5. A pickup for performing the method according to any one of claims 1 to 4, comprising a grid-like electrode arrangement consisting of bars (2) that are electrically conductive but insulated from one another by a non-conductive intermediate layer (23) and arranged in parallel near the yarn (1) at a distance that prevents contact, wherein the bars
- are orientated transversely to the axis of the yam (1); and
- lined up in the axial feed direction of the yam;
- are electrically connected with one another in groups (21,22), wherein one bar of one group alternates with one bar of another group in the axial feed direction of the yarn;
- are arranged in fixed, recurring geometrical constellation to the passing yarn (1); and
- are lined up in a periodic sequence; and
- are similar at least within each group (21,22),
**characterized in that**
- the pickup comprises a circuit arrangement wherein one phase-locked loop (17) is connected to an amplifier (6) or differential amplifier (7) to output an alternating voltage that oscillates at the frequency (f_{H}) of the main component of the useful signal, in particular, as sine-wave oscillation or square-wave pulse sequence, or a direct voltage proportional to this frequency (f_{H}).

6. The pickup according to claim 5 with two groups of bars, **characterized in that** the bars (2) of the one group (21) with ground potential (5) and those of the other group (22) are connected with the input of an amplifier (6) that acts as a charge amplifier to convert charge variations into voltage variations according to claim 2.

7. The pickup according to claim 5 with two groups of bars, **characterized in that** the bars (2) of the one group (21) are connected to the positively evaluating input (11) and the bars (2) of the other group (22) are connected to the negatively evaluating input of a differential amplifier (7) that acts as a charge amplifier to convert charge variations into voltage variations according to claim 2.

8. The pickup according to claim 5, **characterized in that** the differential amplifier (7) is designed as a differential charge amplifier circuit (8) containing only one operational amplifier (10), comprising a capacitor (C) in the inverting return branch and a first resistor (R1), the first terminal of which is connected to the inverting input (10a) of the operational amplifier (10) and the other terminal of which is the negatively evaluating input (12) of the differential charge amplifier circuit (8), and optionally comprising another resistor (R2), the first terminal of which is connected to the non-inverting input (10b) of the same operational amplifier (10) and the other terminal of which is the positively evaluating input (11) of the differential charge amplifier circuit (8), or, without this other resistor (R2), wherein the non-inverting input (10b) of the operational amplifier (10) is at the same time the positively evaluating input (11) of the differential charge inverter circuit (8).

9. The pickup according to claim 5, **characterized in that** a control amplifier (14) and a threshold switch (15) and/or a precision comparator (16) are inserted in an electrically conductive manner between the amplifier (6) or differential amplifier (7), respectively, and the phase-locked loop (17), thus forming a functional chain.

10. The pickup according to claim 5 or claim 9, **characterized in that** a pulse counter (18) provided for counting the periods of the main component, that is, the pulses of a square-wave pulse sequence (24) that can be obtained from the threshold switch (15), the precision comparator (16), or the phase-locked loop (17) to display the axial speed or running length of the yarn.

11. The pickup according to claim 10, **characterized in that** a microprocessor (19) is electrically connected to the output of the threshold switch (15), the precision comparator (16), or the phase-locked loop (17) to calculate a variable to be displayed that is linked to the frequency (f_{H}) of the main component by a mathematical relationship.

12. The pickup according to claim 5 or 9, **characterized in that** a latching phase-locked loop is provided.

## Revendications

1. Procédé pour la détermination sans contact du mouvement de la vitesse axiale ou de la longueur massique d'un fil textile, ainsi que pour la détection ou l'affichage de son mouvement axial, en saisissant la part variable des charges de fil naturelles disposées de manière irrégulière le long du fil à l'aide de l'effet d'influence provenant des charges de fil, où le fil (1) passe par un seul capteur (25) dont les électrodes sont disposées en sens de passage axial du fil, le degré de sensibilité de ces électrodes alternant périodiquement et en fonction de l'endroit par rapport à l'effet d'influence, avant de produire une charge totale variable dans au moins une partie des électrodes y disposées,
**caractérisé en ce**
- **que** sur le capteur (25) est saisi un changement à peu près périodique de la charge totale, le déroulement du temps se manifestant par le déroulement d'une autre grandeur et sous forme d'un signal utile,
- **que** la charge totale variable des électrodes y disposées est mesurée en tant que mélange de fréquences à bande étroite qui, lui, est concentré autour d'une composante principale, la fréquence (f_{H}) de cette composante principale étant proportionnelle à la vitesse axiale du fil passant, et
- **que** le changement périodique de la charge totale est saisi tant pour déterminer la vitesse axiale ou la longueur massique du fil que pour détecter ou afficher son mouvement axial.

2. Procédé suivant la revendication 1, **caractérisé en ce**
- **que** la charge totale à peu près périodique est transformée, sous forme d'un signal utile, en variations de tension à peu près périodiques, et
- **qu'**une partie du mélange de fréquences est supprimée à l'extérieur de la composante principale.

3. Procédé suivant la revendication 2, **caractérisé en ce qu'**une grandeur associée par une relation mathématique à la fréquence (f_{H}) de la composante principale du signal utile, notamment la vitesse axiale ou la longueur massique du fil, y est affichée.

4. Procédé suivant la revendication 2, **caractérisé en ce qu'**afin de détecter ou d'afficher le mouvement axial du fil, le changement périodique du signal utile y est détecté puis affiché, si nécessaire.

5. Capteur pour réaliser le procédé suivant une des revendications 1 à 4, avec un système d'électrodes disposées en grille qui, lui, est composé de barreaux conducteurs séparés les uns des autres par une zone intermédiaire non-conductrice (23), ces barreaux (2) étant disposés en parallèle et à proximité du fil (1), mais à une distance qui évite tout contact entre eux, où les barreaux
- sont alignés en sens transversal par rapport à l'axe du fil (1) et enfilés l'un après l'autre en sens de passage axial du fil,
- sont liées entre eux par groupes (21, 22) conducteurs, tout en s'alternant, en sens de passage axial du fil, l'un des barreaux d'un groupe avec l'un des barreaux d'un autre groupe,
- sont disposés à géométrie fixe par rapport au fil (1) passant et enfilés l'un après l'autre par ordre périodique et répétitif, et
- sont, au moins dans chaque groupe (21, 22), de même nature,
**caractérisé en ce**
- **que** le capteur est muni d'un circuit, où un circuit boucle à phase asservie (17) est connecté, afin d'émettre une tension alternée qui, elle, oscille avec la fréquence (f_{H}) de la composante principale du signal utile, notamment sous forme d'oscillations sinusoïdales ou de séquences d'impulsions rectangulaires, ou bien sous forme d'une tension continue et proportionnelle à ladite fréquence (f_{H}), avec un amplificateur (6) ou avec un amplificateur différentiel (7).

6. Capteur suivant la revendication 5 avec deux groupes de barreaux, **caractérisé en ce qu'**afin de transformer des variations de charge en variations de tension suivant la revendication 2, les barreaux (2) de l'un (21) des deux groupes sont connectés avec la puissance massique (5), tandis que ceux de l'autre groupe (22) sont connectés avec l'entrée d'un amplificateur (6) qui, lui, agit comme amplificateur de charge.

7. Capteur suivant la revendication 5 avec deux groupes de barreaux, **caractérisé en ce qu'**afin de transformer des variations de charge en variations de tension suivant la revendication 2, les barreaux (2) de l'un (21) des deux groupes sont connectés avec l'entrée positive (11), tandis que ceux de l'autre groupe (22) sont connectés avec l'entrée négative (12) d'un amplificateur différentiel (7) qui, lui, agit comme amplificateur de charge.

8. Capteur suivant la revendication 5, **caractérisé en ce que** l'amplificateur différentiel (7) est conçu en tant que circuit d'amplificateurs différentiels et de charge (8) qui ne comprend qu'un seul amplificateur opérationnel (10), où le capteur est connecté, dans la voie de retour, avec un condensateur (C) et avec une première résistance (R1) dont le premier raccordement est connecté avec l'entrée inverseuse (10a) de l'amplificateur opérationnel (10), et dont l'autre branchement est l'entrée négative (12) du circuit d'amplificateurs différentiels et de charge (8), et que le capteur est optionnellement connecté avec une autre résistance (R2) dont le premier raccordement est, de son côté, connecté avec l'entrée non inverseuse (10b) du même amplificateur opérationnel (10), et dont l'autre branchement est l'entrée positive (11) du circuit d'amplificateurs différentiels et de charge (8), ou bien que, sans cette autre résistance (R2), l'entrée non inverseuse (10b) de l'amplificateur opérationnel (10) est en même temps l'entrée positive (11) du circuit d'amplificateurs différentiels et de charge (8).

9. Capteur suivant la revendication 5, **caractérisé en ce qu'**un amplificateur intégré (14) et un commutateur de valeurs seuil (15) et/ou un comparateur de précision (16) conducteur, tous les trois formant une chaîne opérationnelle, sont montés entre l'amplificateur (6) ou l'amplificateur différentiel (7) et le circuit boucle à phase asservie (17).

10. Capteur suivant les revendications 5 ou 9, **caractérisé en ce qu'**il y est prévu, afin d'afficher la vitesse axiale ou la longueur massique du fil, un compteur d'impulsions (18) qui sert à totaliser les périodes de la composante principale ou bien les impulsions d'une séquence rectangulaire (24) émises soit par le commutateur de valeurs seuil (15), soit par le comparateur de précision (16) ou le circuit boucle à phase asservie (17).

11. Capteur suivant la revendication 10, **caractérisé en ce qu'**afin de déterminer une grandeur à afficher qui, elle, est associée par une relation mathématique à la fréquence (f_{H}) de la composante principale, un microprocesseur (19) est connecté par conduit électrique avec la sortie du commutateur de valeurs seuil (15), du comparateur de précision (16) ou du circuit boucle à phase asservie (17.

12. Capteur suivant les revendications 5 ou 9, **caractérisé en ce qu'**il y est prévu un circuit boucle à verrouillage de phase.
